# EUROPEAN PATENT SPECIFICATION

(11) **EP 2 484 169 B1**
(45) Date of publication and mention of the grant of the patent: **14.05.2014**
(21) Application number: 09749185.6
(22) Date of filing: 28.09.2009
(51) Int. Cl.: H04W 76/02, H04W 74/08

(54) **RANDOM ACCESS PROCESS REUSING FOR D2D PROBING IN CELLULAR-AIDED D2D NETWORKS**
WIEDERVERWENDUNG EINES DIREKTZUGRIFFSVERFAHRENS FÜR D2D-SONDIERUNG IN ZELLUNTERSTÜTZTEN D2D-NETZEN
TRAITEMENT D'ACCÈS ALÉATOIRE POUR RÉUTILISER LA DÉTECTION ENTRE DISPOSITIFS DANS DES RÉSEAUX ENTRE DISPOSITIFS À ASSISTANCE CELLULAIRE

(43) Date of publication of application: 08.08.2012
(73) Proprietor: Nokia Corporation, 02150 Espoo (FI)
(72) Inventor: ZOU, Wei, FIN-02150 Espoo (CN); LI, Zhenhong, FIN-02150 Espoo (FI); WANG, Haifeng, FIN-02150 Espoo (FI); WU, Gang, FIN-02150 Espoo (FI)
(74) Representative: Style, Kelda Camilla Karen
(86) International application number: PCT/IB2009/006962
(87) International publication number: WO 2011/036507

(56) References cited:
- EP-A1- 1 998 499
- WO-A2-2004/077920
- US-A1- 2006 270 415
- US-B1- 6 415 146

## Description

### FIELD

The subject matter described herein relates to wireless communications.

### BACKGROUND

There are various types of network configurations, including cellular networks, ad-hoc networks, or a combination of both. In the case of the cellular network, the user equipment communicates (e.g., transmits and/or receives) with another user equipment through a base station. In the case of the ad-hoc network, the user equipment communicates directly with another user equipment. Ad hoc networks are also called device-to-device (D2D) networks, which refers to the direct link(s) between the two user equipments.

In the cellular network, the user equipment communicates information to another user equipment through the base station, such as an evolved Node B (eNB) type base station operating as a centralized controller. Indeed, these user equipments communicate with the base station even when the two user equipments are close to each other. A benefit of the base station approach is direct radio resource control and interference control, but the drawback is, in some cases, the inefficient utilization of resources. For example, twice the resources will be required for a cellular network mode of communications when compared to a direct D2D link transmission between user equipments (when, e.g., the user equipments are close to each other) as one link is required between the user equipments rather than two links (e.g., one link from the user equipment to the base station and another link from the base station to the second user equipment). In some instances, a system using a mix of cellular and ad-hoc may provide better resource utilization and achieve enhanced system throughput.

European patent application publication number EP 1 998 499 describes a system in which a probe message is sent from a first station to a second, remote station over a direct communication link. This elicits a response message including information about link quality. Communication parameters of the direct communication link are then selected in accordance with the link quality information.

United States patent application publication number US 2006/0270415 describes a system in which a wireless station utilizes available metrics, such as link rate, to determine whether to request a direct link with another wireless station.

United States patent number US 6,415,146 describes a wireless communication system in which mobile stations determine whether to establish or continue with a mobile-to-mobile traffic link by monitoring the quality of control information transmitted over the link.

International patent application publication number WO 2004/077920 describes a system in which user equipments establish a peer-to-peer radio connection using link probing signals.

### SUMMARY

In one aspect there is provided a method. The method may include monitoring, at a user equipment, a paging signal, the paging signal including a random access preamble index assigned to another user equipment. The user equipment may be configured to use the random access preamble index assigned to the another user equipment, and receive a signal comprising a random access preamble. The user equipment may measure the received signal to generate an indication representative of a quality of the received signal. Based on the indication rather than a dedicated probe, a determination may be made at the user equipment regarding whether to establish a first connection directly to the another user equipment.

In another aspect there is provided a method. The method may include receiving, at a base station, an indication representative whether a first user equipment is configured to establish a first connection directly to a second user equipment; and establishing, by the base station and based on the indication, a second connection between the first user equipment and the second user equipment, when the first connection is not established. The first and second connections are established based on a random access preamble rather than a dedicated probe to assess a quality of a channel between the first user equipment and the second user equipment.

In another aspect, there may be provided a method. The method may include receiving, at a first user equipment, a preamble assignment message including the random access preamble sequence index used by a second user equipment for a non-contentious random access procedure with a base station. The first user equipment may measure a random access preamble sequence sent by the second user equipment. The measured random access preamble sequence may provide an estimate of a quality of a channel between the first user equipment and the second user equipment. Based on the estimate rather than a dedicated probe, a determination may be made regarding whether to establish a first connection directly between the first user equipment and the second user equipment or establish a second connection between the first user equipment, the base station, and the second user equipment.

In optional variations of the current subject matter, one or more additional features can be included. The user equipment may establish the first connection directly to the another user equipment, when the indication and a first threshold represent that the first connection provides a sufficient link quality. The user equipment may send to a base station, a message proposing the first connection directly to the another user equipment, the first connection comprising a device-to-device link. The user equipment may establish a second connection to the base station to access the another user equipment, when the indication and a second threshold represent that the first connection may not provide the quality of service and send to the base station a message proposing an allocation of the dedicated probing process, when the user equipment is unable to determine, based on the indication, whether to establish at least one of the first connection and the second connection. The indication may be used to determined whether to establish a second connection to a base station to access the another user element. The signal strength, received signal strength indication, and/or signal-to-interference-plus-noise ratio may be measured to generate the indication representative of the quality of the received signal. The calling user equipment may receive a preamble assignment message including another random access preamble sequence index used by a callee user equipment for a non-contentious random access procedure with a base station, the user equipment comprising the calling user equipment and the another user equipment comprising the callee user equipment. The callee user equipment may receive the paging signal including the another random access preamble sequence index for the non-contentious random access procedure, and perform the non-contentious random procedure. The base station may inhibit an allocation of a dedicated device-to-device probe for transmission by at least one of the first user equipment and the second user equipment. The preamble assignment message may be obtained from at least one of a paging signal or media access control message, wherein the second user equipment is not in a radio resource control idle status. Moreover, a set of random access preamble sequences may be divided into a first group and a second group, wherein each preamble sequence in the first group is paired with another preamble sequence in the second group. The user equipment may select a first random access preamble sequence from the first group and monitor for a second random access preamble sequence of the second group paired with the first random access preamble sequence of the first group. The second user equipment may receive an index of the second random access preamble sequence selected by the first user equipment and perform a non-contentious random access procedure using the paired second random access preamble sequence of the second group.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### DESCRIPTION OF DRAWINGS

In the drawings,
FIG. 1 depicts a block diagram of a wireless communication system;
FIG. 2 depicts dedicated D2D probing;
FIG 3 depicts an implementation in which a callee user equipment is initially idle;
FIG 4 depicts using the signaling associated with a RA procedure to determine whether to use a D2D link or a 2-hop cellular link, wherein the user equipment is initially idle;
FIG 5 depicts a non-contentious RA procedure;
FIG 6 depicts using the signaling associated with a RA procedure to determine whether to use a D2D link or a 2-hop cellular link, wherein the user equipment is not initially idle;
FIG 7 depicts a process including thresholds to determine whether to use a D2D link or a 2-hop cellular link;
FIG 8 depicts an example of a user equipment;
FIG 9 depicts a process used at the user equipment;
FIG 10 depicts an example of a base station; and
FIG. 11 depicts a process used at the base station.

Like labels are used to refer to same or similar items in the drawings.

### DETAILED DESCRIPTION

The subject matter described herein relates using the signaling associated with the Random Access (RA) procedure to estimate channel quality in order to decide whether to use a device-to-device (D2D) link between user equipments or a 2-hop cellular link among the user equipments and the base station.

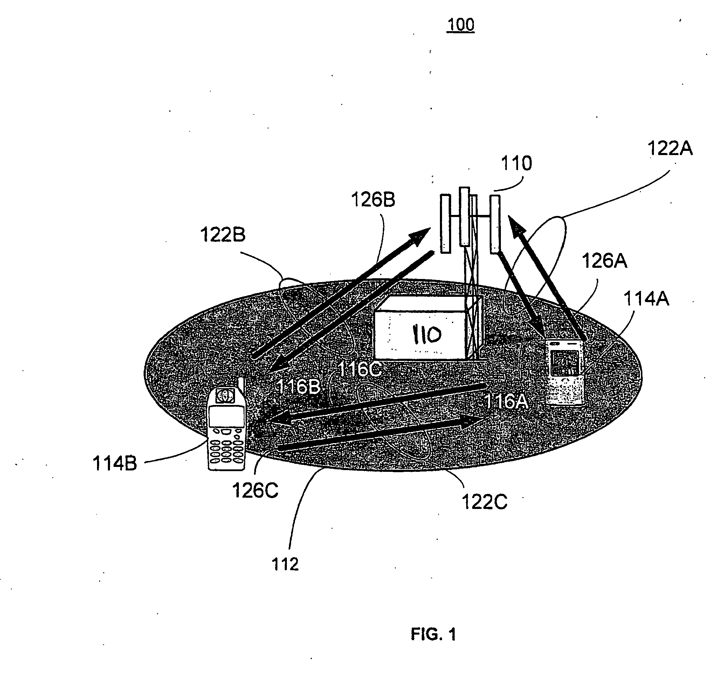

FIG. 1 is a simplified functional block diagram of a wireless communication system 100. The wireless communication system 100 includes a base station 110 supporting a corresponding service or coverage area 112 (also referred to as a cell). The base station 110 is also capable of communicating with wireless devices, such as user equipments 114A-B, within the coverage area. Although FIG 1 depicts a single base station 110, a single coverage area 112, and two user equipments 114A-B, other quantities of base stations, coverage areas, and user equipment may be implemented as well.

In some implementations, base station 110 is implemented as an evolved Node B (eNB) type base station consistent with standards, including the Long Term Evolution (LTE) standards, such as 3GPP TS 36.201, "Evolved Universal Terrestrial Radio Access (E-UTRA); Long Term Evolution (LTE) physical layer; General description," 3GPP TS 36.211, "Evolved Universal Terrestrial Radio Access (E-UTRA); Physical channels and modulation," 3GPP TS 36.212, "Evolved Universal Terrestrial Radio Access (E-UTRA); Multiplexing and channel coding," 3GPP TS.36.213, "Evolved Universal Terrestrial Radio Access (E-UTRA); Physical layer procedures," 3GPP TS 36.214, "Evolved Universal Terrestrial Radio Access (E-UTRA); Physical layer-Measurements," and any subsequent additions or revisions to these and other 3GPP series of standards (collectively referred to as LTE standards). The base station 110 may also be implemented consistently with the Institute of Electrical and Electronic Engineers (IEEE) Standard for Local and metropolitan area networks, Part 16: Air Interface for Fixed Broadband Wireless Access Systems, 1 October 2004, IEEE Standard for Local and metropolitan area networks, Part 16: Air Interface for Fixed and Mobile Broadband Wireless Access Systems, 26 February 2006, IEEE 802.16m, Advanced Air Interface, and any subsequent additions or revisions to the IEEE 802.16 series of standards (collectively referred to as IEEE 802.16).

In some implementations, the wireless communication system 100 may include access links 122A-B between the base station 110 and the user equipments 114A-B. The wireless communication system 100 may also include device-to-device (D2D) links 122C between user equipments 114A-B. The access links 122A-B include a downlink, such as downlinks 116A and 116B, for transmitting from the base station 110 to a corresponding user equipment, such as user equipments 114A-B. The access links 122A-B also include an uplink, such as uplinks 126A and 126B, for transmitting from the user equipments 114A-B to the base station 110.

Although the base station 110 is described as an eNB type base station, the base station 110 may be configured in other ways as well and include, for example, cellular base station transceiver subsystems, gateways, access points, radio frequency (RF) repeaters, frame repeaters, nodes, and include access to other networks as well. For example, base station 110 may have wired and/or wireless backhaul links to other network elements, such as other base stations, a radio network controller, a core network, a serving gateway, a mobility management entity, a serving GPRS (general packet radio service) support node, and the like.

The user equipments 114A-B may be implemented as a mobile device and/or a stationary device. The user equipments 114A-B are often referred to as, for example, mobile stations, mobile units, subscriber stations, wireless terminals, or the like. The user equipment may be implemented as, for example, a wireless handheld device, a wireless plug-in accessory, or the like. In some cases, the user equipment may include one or more of the following: at least one processor, at least one computer-readable storage medium (e.g., memory, storage, and the like), a radio access mechanism, and a user interface. For example, the user equipment may take the form of a wireless telephone, a computer with a wireless connection to a network, or the like.

In some implementations, the links 116A-C and 126A-C each represent a radio frequency (RF) signal. The RF signal may include data, such as voice, video, images, Internet Protocol (IP) packets, control information, and any other type of information. When IEEE-802.16 and/or LTE are used, the RF signal may use OFDMA. OFDMA is a multi-user version of orthogonal frequency division multiplexing (OFDM). In OFDMA, multiple access is achieved by assigning, to individual users, groups of subcarriers (also referred to as subchannels or tones). The subcarriers are modulated using BPSK (binary phase shift keying), QPSK (quadrature phase shift keying), or QAM (quadrature amplitude *modulation), and carry symbols (also referred to as OFDMA symbols) including data coded using a forward error-correction code. Moreover, in some implementations, the wireless communication system 100 can be configured to comply substantially with a standard system specification, such as LTE or other wireless standards, such as WiBro, WiFi, Bluetooth, IEEE 802.16, or it may be a proprietary system. For example, links 116C and 126C may be configured as D2D links in accordance with WiFi or Bluetooth, and links 116A-B and 126A-B may be configured as uplinks and downlinks in accordance with LTE and/or LTE-Advanced.

Device-to-device (D2D) communication links may be incorporated in public land mobile systems, such as the 3rd Generation Partnership Project (3GPP) as well as subsequent generations of wireless systems. Using the cellular system, such as the base station 110, to aid in the establishment of the D2D links 116C and 126C (which share the same band as the links 116A-B and 126A-B) is an approach which incorporates the D2D links into the communication system 100. This approach, referred to as cellular-aided in-band D2D, includes the use of some of the control mechanisms of the base station and/or other control elements within the wireless system. In cellular-aided in-band D2D, a base station 110, such as an evolved Node B (eNB), may control D2D communication links 116C and 126C between user equipments 114A-B. For example, the eNB may decide whether to establish a D2D link between user equipments or establish a 2-hop link between the user equipments via the eNB. This control provided by base station 110 enables the establishment of D2D links 116C and 126C to occur with enhanced interference management and reliable quality of service (QoS) support.

The base station 110 controls not only the establishment of D2D links 116C and 126C between two user equipments 114A-B but the radio resources used by the D2D links 116C and 126C. For example, base station 110 may select the D2D links 116C and 126C, when measurements, such as received signal strength indicators (RSSI), indicate that the quality of the links 122C between the user equipments 114A-B provides sufficient QoS. On the other hand, the base station 110 may select the 2-hop links (e.g., access links 122A-B via the base station 110) to provide communications between user equipments 114A-B, when measurements indicate that the quality of the links 122C cannot provide sufficient QoS. For example, a measurement, such as a received signal strength indication, signal-to-interference-plus-noise ration, or the like, may indicate that an RF channel between the user equipments can support communications via a D2D link (while providing sufficient QoS, such as low bit error rate, packet loss, and the like).

In a cell, such as cell 112, enhanced with cellular-aided in-band D2D, traffic can be delivered from the source user equipment (also referred to as a calling user equipment) to the destination user equipment (also referred to as a callee user equipment) either by D2D links 122C between the user equipments 114A-B or by 2-hop cellular links (e.g., access links 122A-B between user equipment 114A, base station (e.g., eNB) 110, and user equipment 114B). Moreover, the base station 110 may include a D2D module and the user equipment may include a D2D selection controller to control the selection between the D2D links 122C or the 2-hop cellular links 122A-B. Thus, cell capacity may be improved, in some implementations, by selecting links having higher QoS, spectrum efficiency, and/or data throughput.

To select between D2D links 122C or the 2-hop cellular links 122A-B, the user equipment may transmit a dedicated probe signal under the control of the base station (e.g., an eNB), so that another user equipment can measure the quality of the direct link (or RF channel) between these user equipments. This measurement may then be reported to the base station to allow a control mechanism to select between the D2D link or the 2-hop cellular link. For example, if this measurement indicates that a D2D link has good link quality and thus can provide higher spectrum efficiency than a 2-hop cellular link, the control mechanism may then select the D2D link rather than the 2-hop cellular link.

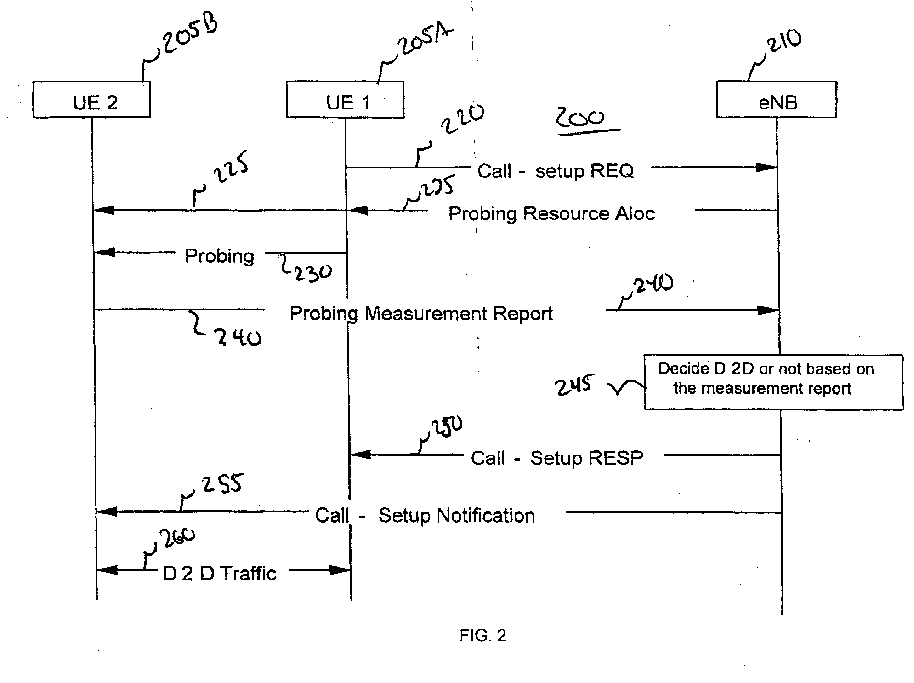

FIG 2 shows a typical D2D call setup procedure including a dedicated D2D probe allocated by the base station. After the calling user equipment 205A (labeled UE1) sends a call setup request 220, the eNB 210 sends a message at 225 to initiate a resource allocation at user equipment 205A to perform dedicated D2D probing. At 230, the user equipment 205A sends a dedicated D2D probe signal, which is received and measured at user equipment 205B (labeled UE2). At 240, the measurement of the D2D probe signal at user equipment 205B is sent via a probing measurement report to eNB 210. At 245, the eNB 210 determines whether or not to allocate a D2D link to the user equipments 205A-B. This determination results in a decision provided to the related user equipment, such as user equipment 205A and user equipment 205B via a call setup response 250 or a call setup notification 255. At 260, the D2D links are established between user equipment 205A and user equipment 205B. Although 260 depicts a direct D2D link between user equipment 205A and user equipment 205B, the communications between user equipment 205A and user equipment 205B may also be selected by the eNB 210 as a 2-hop cellular link via the eNB 210.

Although the dedicated D2D probing method depicted at FIG. 2 typically provides accurate D2D link quality between the user equipments 205A-B, the dedicated D2D probing at 230 may also waste radio resources for the dedicated D2D probe, especially when the D2D measurement indicates a poor channel for a prospective D2D link and thus a conventional 2-hope cellular link is selected.

Rather than a dedicated D2D probe, such as the probing signal depicted at 230 of FIG 2, some embodiments may implement a calling user equipment which instead monitors the random access (RA) procedure preamble sent by the callee user equipment, when the callee user equipment attempts to connect to the eNB (which is after the callee user equipment is paged by the eNB). The calling user equipment may then measure the RA procedure preamble sent by the callee user equipment to the eNB. The phrase "RA procedure" refers to a process for keeping transmissions from different user equipments (e.g., orthogonal, uplink transmissions) aligned with the frame timing of the base station, such as an eNB. Thus, when timing is not aligned, the RA procedure is used by the user equipment to acquire timing with the base station. During the RA procedure, the user equipment selects a RA preamble sequence from a set of sequences for a cell in order to send the RA preamble from the user equipment to the base station. In response to receiving the RA preamble, the base station may provide a timing advance value to allow the user equipment to align itself with the base station.

Based on this measurement of the RA procedure preamble, a D2D selection controller at the calling user equipment may estimate the quality of a D2D link, which may be used as a reference value to select whether a D2D link should be established between the calling user equipment and the callee user equipment or whether a 2-hop cellular link should be established between the calling user equipment and the callee user equipment. The initial D2D link selection may also be performed by the eNB, when the measurement or estimate of quality is reported by the calling user equipment to the eNB.

In implementations using LTE, an idle callee user equipment typically performs a RA procedure (also referred to as a RA process) after receiving a call setup paging signal from the eNB in order to get into a connection with a radio bearer, e.g., a radio resource control connected status (RRC_Connected). Thus, rather than implement dedicated paging signal 230 as described with respect to FIG 2, in some embodiments, the existing RA procedure may be used by a prospective calling user equipment to measure the quality of the link to the callee user equipment. This measurement is then used to select whether a D2D link or 2-hop cellular link should be selected for use to the callee user equipment.

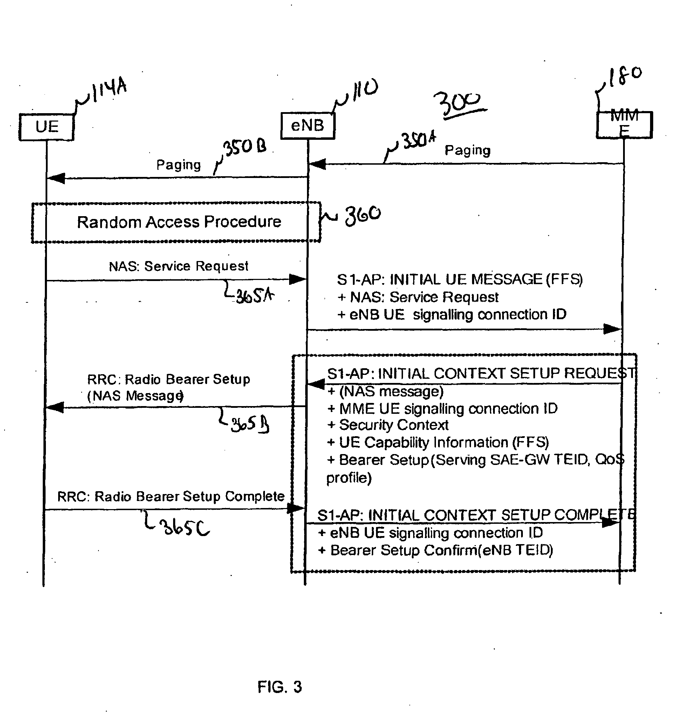

FIG 3 depicts an implementation in which a callee user equipment is initially idle. According to LTE specification "3GPP TS 36.300 v8.7.0 E-UTRAN, Overall Description," when a call request arrives at the eNB 110, the eNB 110 forwards the call request to a mobility management entity 180, which initiates paging 350A-B in the tracking area of the callee user equipment 114A, when the callee user equipment 114A is idle. Once the callee user equipment 114A receives the paging signal 350A-B, the callee user equipment 114A then performs a RA procedure at 360 to access the eNB 110 to begin establishment of a radio bearer. At 365A-C, Non-Access Stratum (NAS) signaling messages are exchanged between the eNB 110 and the callee user equipment 114A to setup a radio bearer at the eNB 110. When this connection is established, the callee user equipment 114A is in a RRC_Connected status.

When the calling user equipment 114B seeks to establish a D2D link to the callee user equipment 114A, the calling user equipment 114B establishes a connection, e.g., becomes RRC_Connected, via a RA procedure, and then sends a call setup request to the eNB 110. If eNB 110 does not find the callee user equipment 114A (e.g., because callee user equipment is idle), the eNB 110 forwards the call setup request to the mobility management entity (MME) 180. At 350A, the MME 180 initiates a paging signal with a specified RA sequence index to the callee user equipment 114A. The calling user equipment 114B monitors the paging channel sent at 350A-B to obtain the RA sequence index that will be used by the callee user equipment 114A(which allows the calling user equipment to align itself and thus monitor transmission by the callee user equipment). The callee user equipment 114A performs its RA procedure at 360 using the specified RA sequence included in the paging signal sent at 350A-B, and thus becomes RRC_Connected. During this connect period, the calling user equipment 114B monitors the RA procedure at 360, which allows the calling user equipment 114B to measure the prospective link between the user equipments 114A-B. From the perspective of the calling user equipment 114B, the signaling of the RA procedure 360 serves (e.g., the RA procedure preamble) as a probe signal sent by the callee user equipment 114A. Thus, the calling user equipment 114B is able to assess the quality of the link 122C using existing signaling (e.g., the RA procedure 360) without a dedicated D2D being allocated by the eNB 110, as described above with respect to 230.

In FIG. 3, the random access (RA) procedure at 360 is typically contention-based. In order to reuse this callee RA procedure 360 for D2D probing, non-contention RA procedures may also be used. To that end, the RA preamble sequence (or an index for the sequence) is thus added into the paging signal sent at 350A-B, so that the callee user equipment 114A can use the specified sequence for the RA preamble, when performing a non-contentious random access procedure with the eNB 110.

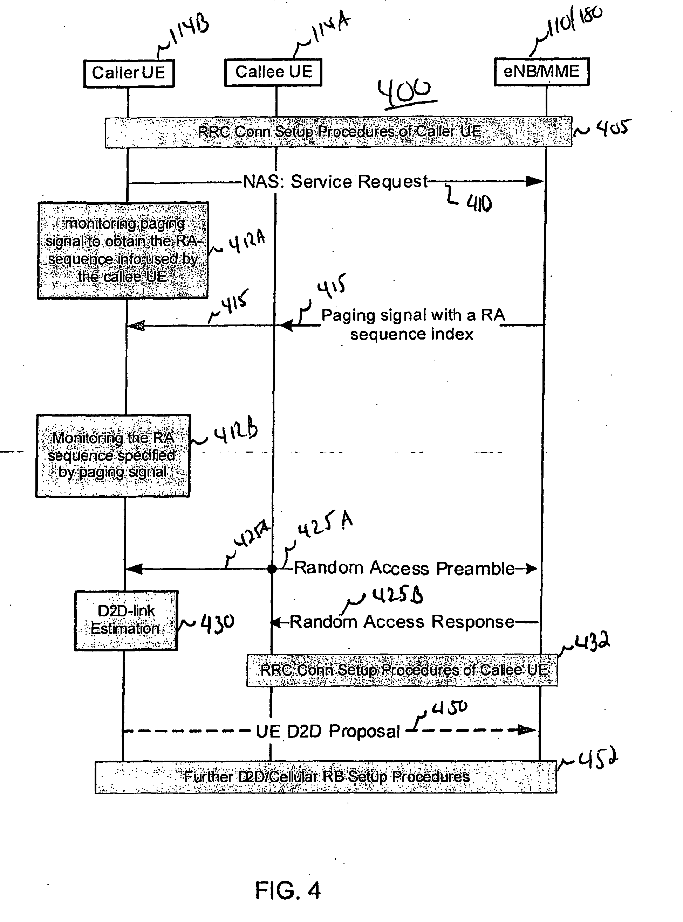

FIG. 4 depicts the D2D establishment process 400 which uses the signaling of the RA procedure rather than a dedicated D2D probe. When the callee user equipment 114A is idle, at 405, the calling user equipment 114B gets connected, e.g., establishes a RRC Connected status, via a RA procedure. At 410, the calling user equipment 114B sends one or more NAS service request messages to request setup of a new call. Because the eNB 110 is not aware of the location of the callee user equipment 114A, the eNB 110 forwards the call setup request to MME 180, which keeps the tracking area record for user equipments 114A-B.

At 415S, after MME 180 finds the callee user equipment 114A and the tracking area, MME 180 initiates a paging signal to the callee user equipment 114A. The paging signal sent at 415 may also include information, such as the International Mobile Subscriber Identity (IMSI), the S-Temporary Mobile Subscriber Identity (S_TMSI), and the RA sequence index (which may be configured to include 6 bits). The callee user equipment 114A may thus perform a non-contention based RA to become connected to the eNB 110, resulting in a RRC_Connected status, although a contentious RA procedure may be used as well.

If the calling and callee user equipments are in the same cell 112, the calling user equipment 114B may also receive the paging signal sent at 415. As such, the calling user equipment 114B also receives the information regarding the RA sequence index used by the callee user equipment 114A.

At 412A-B, the calling user equipment 412 monitors the paging signal to obtain the RA sequence index information used by the callee user equipment 114E. After calling user equipment 114B receives the RA sequence index, the calling user equipment 114B monitors, at 412B, the RA preamble sequence sent at 425A from the callee user equipment 114A to the eNB 110.

At 430, the calling user equipment 114B measures the RA preamble sequence sent at 425A by callee user equipment 114A. Thus, rather than measure a dedicated D2D probing signal as described at 230, the calling user equipment 114B measures the signaling of the RA preamble sequence to estimate the quality of the link 122C between the callee user equipment 114A and the calling user equipment 114B.

At 432, the callee user equipment 114A establishes an RRC_Connected status with the eNB 110.

At 450, the calling user equipment 114B may send, based on the measurement of the RA sequence signal sent at 425A, a D2D proposal to eNB 110 for subsequent actions. For example, the calling user equipmentl 14B may measure the RA preamble sequence signal sent at 425A and determine that the link 122C (which is between calling user equipment114B and callee user equipment114A), will be of sufficient quality if established. When this is the case, the calling user equipment 114B establishes the D2D link 122 to callee user equipment 114A, and also notifies the eNB 110 of the establishment of the D2D link 122. If the link 122C is not of sufficient quality, the calling user equipment 114B may notify the eNB 110 that a 2-hop cellular link should be established between the callee and calling user equipments 114A-B (e.g., via links 122A-B).

At 452, the D2D link 122C or the 2-hop cellular links 122A-B are established to enable communications between the user equipments 114A-B. By monitoring the RA preamble sequence from callee user equipment for the initial D2D decision at calling user equipment, radio resources allocations may be saved and quicker establishment of the D2D link may be realized in cases when the callee user equipment is idle.

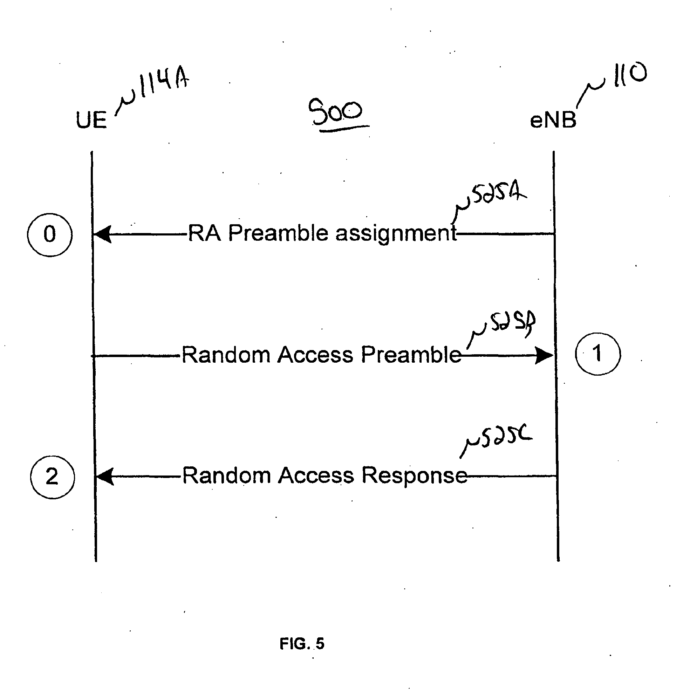

In some cases, the callee user equipment 114A may not be in an idle state, e.g., already in a connected status to the eNB 110 (e.g., in an RRC_Connected status). When this is the case, the paging signal sent at 415 will not be initiated by the MME 180, and there is thus no need for the callee user equipment 114A to perform the RA procedure of 425A-B. This is because the callee user equipment 114A has already set up the RRC signaling connections with eNB 110. When the callee user equipment 114A is already connected to a radio bearer (e.g., in a RRC_Connected status), an additional non-contention based RA procedure (which may be in accordance with 3GPP TS 36.300 v8.7.0 E-UTRAN Overall Description) can be performed for D2D selection, as described further below with respect to FIG. 5.

FIG. 5 depicts a process 500 for a non-contentious based random access (RA) procedure. The calling user equipment 114B gets into a RRC_Connected status through the RA procedure, and then sends a call setup request to eNB 110. If eNB 100 determines (e.g., via a signaling exchange between eNB and MME) that the callee user equipment 114A is in an RRC_Connected status and the callee user equipment is in the same cell 112 as the calling user equipment 114B, the eNB 110 initiates a non-contention based RA procedure for the callee user equipment 114E. Specifically, the eNB 110 110 sends a predefined MAC message to notify the calling user equipment 114B of the RA preamble sequence index (used in by the callee user equipment's 114A non-contention based RA procedure). The eNB then performs the non-contention based RA procedure for the callee user equipment 114A (using, e.g., procedures specified in 3GPP TS 36.300 v8.7.0 E-UTRAN, Overall Description). During this period, the calling user equipment 114B monitors the RA preamble sequence sent from callee user equipment 114A and measures the D2D link 122 between them.

In the case when the callee user equipment 114A is in an RRC_Connected status, the MME 180 directly forwards related signaling to the eNB 110 that serves the callee user equipment 114A. When the callee user equipment 114A is already in an RRC_Connected status, a non-contention based RA may be performed (e.g., according to 3GPP TS 36.300 v8.7.0 E-UTRAN Overall Description). At 525A, the eNB 110 sends to the callee user equipment 114A, a RA preamble assignment request. At 525B, the callee user equipment 114A sends to eNB 110 the RA preamble being used by the callee user equipment 114A. At 525C, the eNB 110 sends the RA response to the callee user equipment 114A.

If eNB 110 finds that callee user equipment 114A is in a RRC_Connected status and the callee user equipment 114A is in the same cell 112 with the calling user equipment 114B (this process might include signaling exchange between eNB and MME), the eNB 110 will initiate a non-contention based RA procedure for the callee user equipment 114A. Because calling user equipment 114B is in the same cell 112 as the callee user equipment 114A, the user equipments 114A-B belongs to a same eNB 110. Hence, the eNB 110 can provide the calling user equipment 114B the RA preamble sequence which will be used by the callee user equipment 114A for the non-contention based RA procedure. The RA preamble sequence may be included in a predetermined MAC message which is sent to the callee user equipment 114A, as noted above. After that, the calling user equipment 114B monitors the RA procedure signaling for the given RA preamble sequence. The monitoring allows the calling user equipment 114B to measure the signaling carrying the RA procedure from the callee user equipment 114A. Moreover, the calling user equipment 114B can then estimate the link quality between the callee and calling user equipments 114A-B. The estimate allows at least one of the calling user equipment 114 or the eNB to decide, based on the estimate, whether to select the D2D link 122C or the 2-hop cellular links 122A-B. By monitoring one or more portions of the RA procedure 525A-C, the calling user equipment 114B can measure the signaling carrying the RA preamble sequence 525A-C and thus determine a selection between the D2D link or the 2-hop cellular link. The RA preamble sequence is essentially co-opted as a D2D probe rather than allocate a dedicated D2D probe as described at 230.

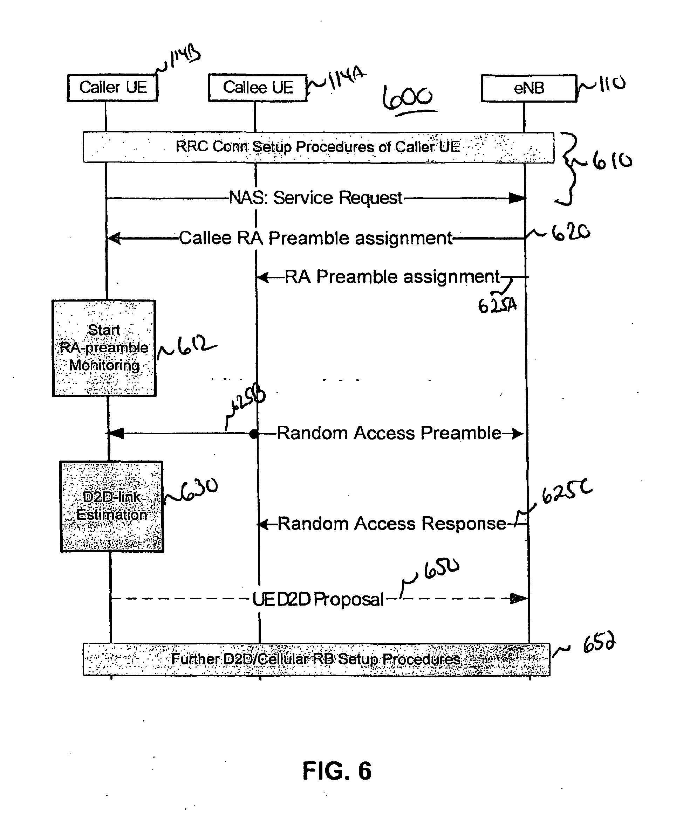

FIG. 6 depicts a process 600 for monitoring and measuring the signaling of the RA procedure (e.g., FIG. 6 at 625B) to determine whether to select the D2D link 122C or the 2-hop cellular link 122A-B. Rather than use a dedicated D2D probe as described at 230, the signaling used for the RA procedure (e.g., RA preamble sequence) is used to measure the link (e.g., channel) quality between the calling user equipment 114B and the callee user equipment 114A, saving thus resources of the system 100.

At 610, the calling user equipment 114B, the callee user equipment 114A, and the eNB 110 have established connections (e.g., calling user equipment 114B and the callee user equipment 114A are each in a RRC_Connected status). After eNB 110 receives a call setup message and determines that the callee user equipment 114A is in a RRC_Connected status and is in the same cell 112 as the calling user equipment 114B, the eNB 110 sends, at 620, a callee RA preamble assignment message to notify the calling user equipment 114B of the RA preamble sequence index that will be used by the callee user equipment 114A in the non-contention based RA procedure with the eNB 110.

Next, a non-contention based RA procedure is initiated as indicated by messages 625A-C between the callee user equipment 114A and the eNB 110. With *a priori* knowledge of the RA sequence index being used by the callee user equipment 114A, the calling user equipment 114B can monitor at 612 the signaling associated with the RA procedure (e.g., measuring the signal strength of the signaling carrying the RA preamble sequence 625B sent from the callee user equipment 114A to the eNB 110).

At 630, the calling user equipment 114B measures the RA preamble sequence sent at 425A by callee user equipment 114A to estimate the signal quality of the link 122C. Thus, rather than allocate a dedicated D2D probing signal for measurement, the calling user equipment 114B measures the quality of the existing signaling, such as the RA preamble sequence, transmitted by the calling user equipment 114A at 625C to estimate the quality of the link 122C between the calling and callee user equipments 114A-B.

At 650, the calling user equipment 114B may send, based on the measurement of the RA preamble sequence signal sent at 625B, a D2D proposal to eNB 110 for subsequent actions. At 652, the D2D link 122C or the 2-hop cellular links 122A-B are established to enable communications between the calling and callee user equipments 114A-B.

In some of the embodiments described herein, the calling user equipment 114B monitors the paging channel or receives a predetermined MAC message to obtain the information on the RA preamble sequence index that will be used by the callee user equipment 114B.

Rather than monitor the paging channel or rely on the predetermined MAC message, RA sequence pairing may also be implemented. Specifically, the RA preamble sequences are globally (e.g., within the system 100) classified into 2 groups, such as a calling RA group and a callee RA group. Each of the RA preamble sequences in the calling RA group is paired with a corresponding sequence in the callee RA group, e.g., a 1-to-1 pairing between the groups. The pairing relation is known by the user equipments and eNBs. In some implementations, a cell, such as cell 112, may require 128 RA sequences (2 groups) rather than the typical 64 RA sequences.

To initiate a new call, the idle calling user equipment randomly selects an RA preamble sequence from the calling RA group to perform the RA procedure with the eNB. After the eNB receives that RA preamble sequence of the calling RA group, the eNB notifies the callee user equipment to use the paired RA preamble sequence assigned to the callee RA group (e.g., by sending the notification via either a paging channel or by MAC signaling. In this way, the calling user equipment may directly start monitoring the desired RA preamble sequence of the callee user equipment without extra signaling monitoring or waiting to receive the predetermined MAC message described above because the calling user equipment knows (based on the 1-to-1 pairing between the groups) which RA preamble sequence will be sent by the callee user equipment.

In some implementations, after the D2D channel measurement (e.g., at 430 and 630), an initial D2D decision is made at the calling user equipment 114B rather than at the eNB 110. Specifically, the calling user equipment 114B decides whether to select the D2D link 122C or the 2-hop link 122A-B. Moreover, the decision may be made based on two thresholds, such as a cellular-link decision threshold (which is denoted by A) and a D2D link decision threshold (which is denoted by B). For example, when A is less than B, then the D2D link 122C is selected.

To further illustrate the thresholds, the following example is provided. The threshold A and the threshold B may each represent received signal strength indication (RSSI) thresholds for the RA procedure (e.g., the RA preamble 425A or 625B) received from callee user equipment 114A, although the decision may be based on other values as well. The RSSI threshold values may be predefined and statically configured in D2D capable user equipment, or may be notified to the source user equipment by the eNB, when the eNB is configured to define the RSSI thresholds.

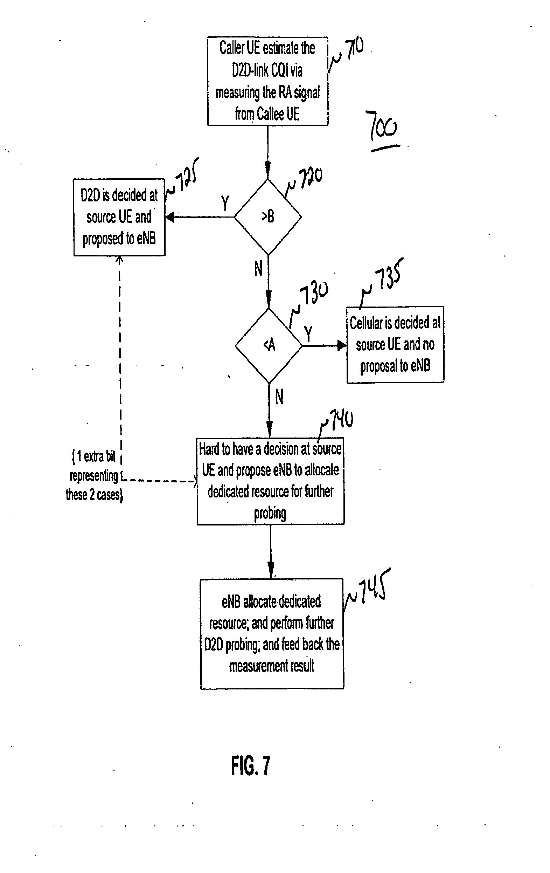

FIG 7 depicts an example decision process 700 to select between a direct D2D link and a 2-hop cellular link. In some implementations, the calling user equipment may send a 1-bit D2D proposal message to the eNB if the calling user equipment decides to select the use of a D2D link (in which case no further D2D probing will be requested) or decides to request a radio resource allocation to perform dedicate D2D probing. For example, the values "0" and "1" can be used to represent these two decisions. If cellular link is determined in the initial D2D decision at the calling user equipment, the calling user equipment may not send anything to the eNB as a conventional mechanisms will be used to access the cellular links 122A-B for communications between the calling user equipment, the eNB, and the callee eNB.

Referring to FIG. 7, at 710, the calling user equipment 114B estimates a channel quality indicator (CQI) for the D2D link 122C by measuring the RSSI of the RA preamble sequence sent by the callee user equipment 114A to the eNB 110.

At 720, if the measured RSSI is about greater than a threshold, B, representing a D2D link decision threshold, the calling user equipment 114B may decide, at 725, to establish a D2D link 122C with the callee user equipment 114A and propose the establishment (or merely notify the eNB) of the D2D link 122C. The notification may be implemented as a 1-bit signal to the eNB 110.

At 730, if the measured RSSI is not greater than the threshold, B, and the measured RSSI is less than a threshold A (which represents a cellular-link decision threshold), the calling user equipment 114B may decide, at 735, to establish 2-hop cellular-links 122A-B between the calling user equipment 114B and callee user equipment 114A via the eNB 110. In some implementations, this decision is not signaled to the eNB 110.

At 740, if the measured RSSI is not greater than the threshold, B, and the measured RSSI is not less than the threshold A, the calling user equipment 114B may defer any decision to the eNB 110, so that the eNB 110 can determine whether to establish the D2D link 122C or establish 2-hop cellular-links 122A-B.

At 745, the eNB 110 allocates the resources for the establishment of the D2D link 122C or the establishment of the 2-hop cellular-links 122A-B. In some cases, the eNB 110 may perform further dedicated D2D probing to determine whether to establish the D2D link 122C or the 2-hop cellular-links 122A-B. The measurements at the user equipment of the dedicated D2D probing are sent from the user equipment to the eNB as feedback.

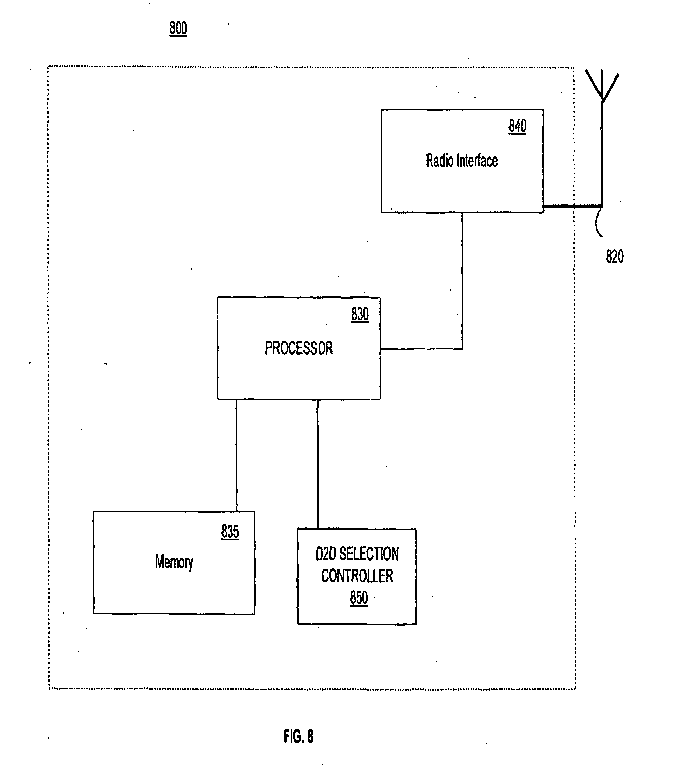

FIG 8 depicts an exemplary user equipment 800, which may be implemented at one or more of user equipments 114A-B. The user equipment may include an antenna 820. The user equipment may also includes a radio interface 840, which may include other components, such as filters, converters (e.g., digital-to-analog converters and the like), symbol demappers, an Inverse Fast Fourier Transform (IFFT) module, and the like, to process symbols, such as OFDMA symbols, carried by a downlink or an uplink. In some implementations, the user equipment may also be compatible with IEEE 802.16, LTE, LTE-Advanced, and the like. The user equipment further includes a processor 830 for controlling the user equipment and for accessing and executing program code stored in memory 835.

Furthermore, the user equipment may include a D2D selection controller 850. The D2D selection controller 850 may be configured to perform one or more of the aspects noted with respect to processes 400, 500, 600, 700, and 900 (e.g., those aspects associated with the user equipment described herein). For example, the D2D selection controller 850 may monitor the RA preamble sequence, control the measurement of the RA procedure to determine an estimate of the quality of links, report any activity and/or measurements to the eNB base station, and the like.

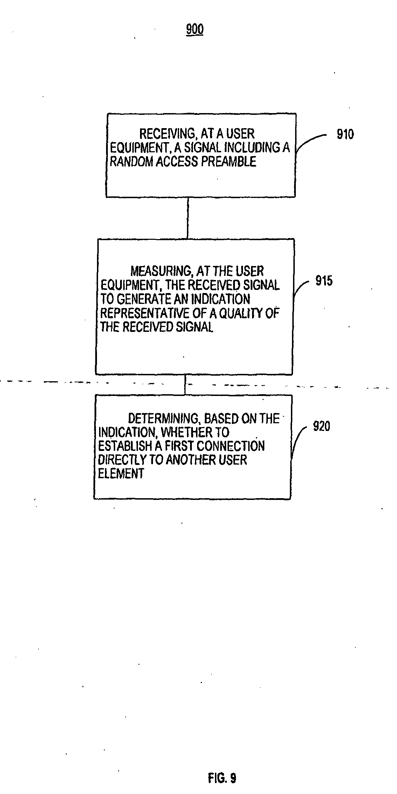

FIG 9 depicts a process 900 used by the user equipment described herein. At 910, the user equipment receives a signal. The signal is a control signal, such as a random access preamble sequence rather than a dedicated D2D probe. At 915, the user equipment measures the received signal. The measurement may be used to generate an indication representative of a quality of the received signal. For example, the indication may represent RSSI, although other metrics may be used as well.

At 920, the user equipment determines, based on the indication, whether to establish a first connection, such as a D2D link, directly to another user equipment. Moreover, if the signal indication corresponds to a channel between the user equipments with sufficient quality (e.g., good RSSI), the first connection may be established as a D2D link. On the other hand, a poor quality link may instead result in second connection via a 2-hop link. In some implementations, the indication is implemented as described above with respect to FIG 7.

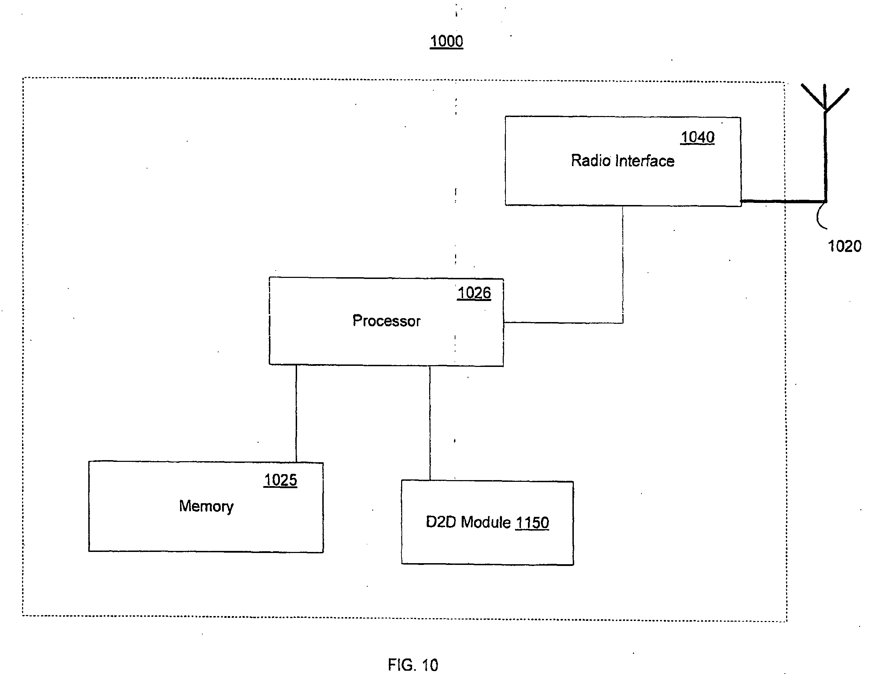

FIG. 10 depicts an example implementation of a base station 1000, which may be implemented at base station 110. The base station may include an antenna 1020 configured to transmit via a downlink and configured to receive uplinks via the antenna(s) 1020. The base station may further include a radio interface 1040 coupled to the antenna 1020, a processor 1026 for controlling the base station and for accessing and executing program code stored in memory 1135. The radio interface 1040 further includes other components, such as filters, converters (e.g., digital-to-analog converters and the like), mappers, a Fast Fourier Transform (FFT) module, and the like, to generate symbols for a transmission via one or more downlinks and to receive symbols (e.g., via an uplink). In some implementations, the base station is also compatible with IEEE 802.16, LTE, LTE-Advanced, and the like, and the RF signals of downlinks and uplinks may be configured as an OFDMA signal. The base station may include a D2D module 1150. The D2D module 1150 may send, receive, and/or control aspects of the D2D selection described herein with respect to the eNB and/or base station.

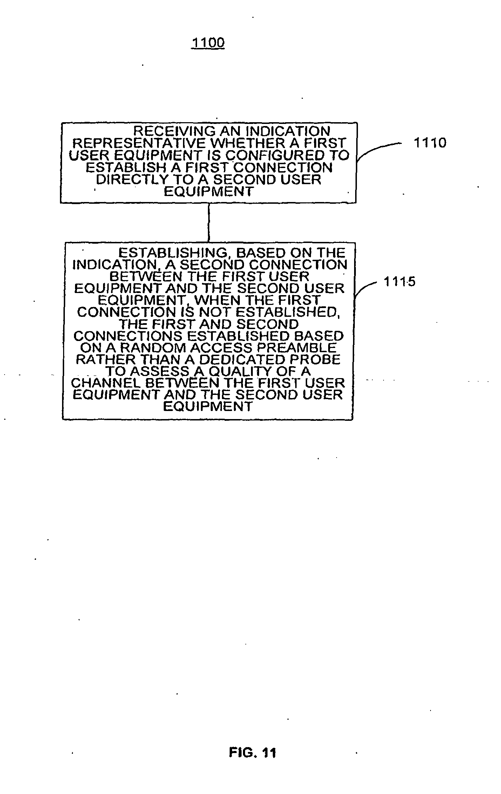

FIG 11 depicts a process 1100 used by a base station configured with the D2D module 1150.

At 1110, the base station receives an indication representative whether a first user equipment is configured to establish a first connection directly to a second user equipment. For example, the indication may be a message including a report of whether the first connection has been (or should be) selected. Moreover, the user equipment may report that a D2D link has been configured at the user equipment, or the user equipment may report that the eNB should initiate the establishment (e.g., control or signal) of a D2D link.

At 1115, the base station may, based on the indication, establishes a second connection between the first user equipment and the second user equipment, when the first connection is not established. Rather than a dedicated D2D probe, the indication represents a measurement of a random access preamble sequence. This measurement is made by a user equipment to assess a quality of a channel between the first user equipment and the second user equipment.

The subject matter described herein may be embodied in systems, apparatus, methods, and/or articles depending on the desired configuration. For example, the base stations and user equipments (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "machine-readable medium" refers to any computer program product, computer-readable medium, apparatus and/or device (e.g., magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. For example, the implementations described above may be directed to various combinations and subcombinations of the disclosed features and/or combinations and subcombinations of several further features disclosed above. In addition, the logic flow depicted in the accompanying figures and/or described herein does not require the particular order shown, or sequential order, to achieve desirable results. Other embodiments may be within the scope of the following claims.

## Claims

1. A method comprising:
monitoring (412A), at a user equipment (114B), a paging signal, the paging signal including a random access preamble index assigned to another user equipment (114A);
receiving (910), at the user equipment configured to use the random access preamble index assigned to the another user equipment, a signal (425A) comprising a random access preamble;
measuring (915), at the user equipment, the received signal to generate (430) an indication representative of a quality of the received signal; and
determining (920), at the user equipment, based on the indication rather than a dedicated probing process, whether to establish a first connection directly to the another user equipment.

2. The method of claim 1 further comprising:
establishing, by the user equipment, the first connection directly to the another user equipment, when the indication and a first threshold represent that the first connection provides a sufficient link quality;
sending, by the user equipment to a base station, a message proposing the first connection directly to the another user equipment, the first connection comprising a device-to-device link;
establishing, by the user equipment, a second connection to the base station to access the another user equipment, when the indication and a second threshold represent that the first connection may not provide the sufficient link quality; and
sending (740), by the user equipment to the base station, a message proposing an allocation for the dedicated probing process, when the user equipment is unable to determine, based on the indication, whether to establish at least one of the first connection and the second connection.

3. The method of claim 1, wherein determining further comprises:
determining, based on the indication, whether to establish a second connection to a base station to access the another user equipment.

4. The method of any of claims 1 or 3, wherein measuring further comprises:
measuring at least one of a signal strength, a received signal strength indication, or a signal-to-interference-plus-noise ratio, or other radio channel parameters to generate the indication representative of the quality of the received signal.

5. The method of any of claims 1 or 3-4 further comprising:
receiving, at a calling user equipment, a preamble assignment message (620) including another random access preamble sequence index used by a callee user equipment for a non-contentious random access procedure with a base station, the user equipment comprising the calling user equipment and the another user equipment comprising the callee user equipment.

6. The method of any of claims 1 or 3-4 further comprising:
receiving, at the callee user equipment, another paging signal including another random access preamble sequence index for the non-contentious random access procedure; and
performing, by the callee user equipment configured in accordance with the another random access preamble sequence index, the non-contentious random access procedure.

7. An apparatus (800) comprising:
at least one processor (830);
at least one memory (835), wherein the at least one processor and the at least one memory are configured to provide at least the following:
monitor (412A), at a user equipment (114B), a paging signal, the paging signal including a random access preamble index assigned to another user equipment (114A);
receive (910), at the user equipment configured to use the random access preamble index assigned to the another user equipment, a signal (425A) comprising a random access preamble;
measure (915), at the user equipment, the received signal to generate (430) an indication representative of a quality of the received signal; and
determine (920), based on the indication rather than a dedicated probing process, whether to establish a first connection directly to the another user equipment.

8. The apparatus of claim 7, wherein the apparatus is further configured to
establish, by the user equipment, the first connection directly to the another user equipment, when the indication and a first threshold represent that the first connection provides a sufficient link quality;
send, by the user equipment to a base station, a message proposing the first connection directly to the another user equipment, the first connection comprising a device-to-device link;
establish, by the user equipment, a second connection to the base station to access the another user equipment, when the indication and a second threshold represent that the first connection may not provide the sufficient link quality; and
send (740), by the user equipment to the base station, a message proposing an allocation for the dedicated probing process, when the user equipment is unable to determine, based on the indication, whether to establish at least one of the first connection and the second connection.

9. The apparatus of claim 7, wherein the processor configured to determine whether to establish a first connection is further configured to
determine, based on the indication, whether to establish a second connection to a base station to access the another user equipment, wherein the another user equipment is in a radio resource control idle status.

10. The apparatus of any of claims 7 or 9, wherein the processor being configured to measure the received signal is further configured to
measure at least one of a signal strength, a received signal strength indication, or a signal-to-interference-plus-noise ratio to generate the indication representative of the quality of the received signal.

11. The apparatus of any of claims 7 or 9-10, wherein the apparatus is further configured to:
receive, at a calling user equipment, a preamble assignment message including another random access preamble sequence index used by a callee user equipment for a non-contentious random access procedure with a base station, the user equipment comprising the calling user equipment and the another user equipment comprising the callee user equipment.

12. The apparatus of any of claims 7 or 9-10, wherein the apparatus is further configured to
receive, at the callee user equipment, another paging signal including another random access preamble sequence index for the non-contentious random access procedure; and
perform, by the callee user equipment configured in accordance with the another random access preamble sequence index, the non-contentious random access procedure.

13. A method comprising:
receiving (1110), at a base station (110, 180), an indication representative whether a first user equipment (114B) is configured to establish a first connection directly to a second user equipment (114A); and
establishing (1115), by the base station and based on the indication, a second connection between the first user equipment and the second user equipment, when the first connection is not established, wherein the first and second connections are established based on a random access preamble rather than a dedicated probe to assess a quality of a channel between the first user equipment and the second user equipment.

14. The method of claim 13 further comprising:
inhibiting, by the base station, an allocation of a dedicated device-to-device probe for transmission by at least one of the first user equipment and the second user equipment.

15. An apparatus (1000) comprising:
at least one processor (1026);
at least one memory (1025), wherein the at least one processor and the at least one memory are configured to provide at least the following:
receive (1110), at a base station (110, 180), an indication representative whether a first user equipment (114B) is configured to establish a first connection directly to a second user equipment (114A); and
establish (1115), based on the indication, a second connection between the first user equipment and the second user equipment, when the first connection is not established, wherein the first and second connections are established based on a random access preamble rather than a dedicated probe to assess a quality of a channel between the first user equipment and the second user equipment.

16. The apparatus of claim 15, wherein the apparatus is further configured to
inhibit, by the base station, an allocation of a dedicated device-to-device probe for transmission by at least one of the first user equipment and the second user equipment.

17. A computer program comprising instructions to configure a processor to cause a method according to any of claims 1-6 or claims 13-14 to be performed.

## Patentansprüche

1. Verfahren, umfassend:
Überwachen (412A), an einer Benutzerausrüstung (114B), eines Rufsignals, wobei das Rufsignal einen Direktzugriff-Präambelindex, der einer anderen Benutzerausrüstung (114A) zugewiesen ist, enthält;
Empfangen (910), an der Benutzerausrüstung, die konfiguriert ist, den Direktzugriff-Präambelindex, der einer anderen Benutzerausrüstung zugewiesen ist, zu verwenden, eines Signals (425A), das eine Direktzugriff-Präambel umfasst;
Messen (915), an der Benutzerausrüstung, des empfangenen Signals, um eine Anzeige, die eine Qualität des empfangenen Signals repräsentiert, zu erzeugen (430); und
Bestimmen (920), an der Benutzerausrüstung, eher auf der Anzeige als auf einem dedizierten Sondierungsprozess basierend, ob eine erste Verbindung direkt zu der anderen Benutzerausrüstung herzustellen ist.

2. Verfahren nach Anspruch 1, ferner umfassend:
Herstellen, durch die Benutzerausrüstung, der ersten Verbindung direkt zu der anderen Benutzerausrüstung, wenn die Anzeige und ein erster Schwellenwert repräsentieren, dass die erste Verbindung eine ausreichende Qualität der Verknüpfung bereitstellt;
Senden, durch die Benutzerausrüstung zu einer Basisstation, einer Nachricht, die die erste Verbindung direkt zu der anderen Benutzerausrüstung vorschlägt, wobei die erste Verbindung eine Vorrichtung-zu-Vorrichtung-Verknüpfung umfasst;
Herstellen, durch die Benutzerausrüstung, einer zweiten Verbindung zu der Basisstation, um auf die zweite Benutzerausrüstung zuzugreifen, wenn die Anzeige und ein zweiter Schwellenwert repräsentieren, dass die erste Verbindung die ausreichende Qualität der Verknüpfung unter Umständen nicht bereitstellt; und
Senden (740), durch die Benutzerausrüstung zu der Basisstation, einer Nachricht, die eine Zuteilung für den dedizierten Sondierungsprozess vorschlägt, wenn die Benutzerausrüstung nicht in der Lage ist, zu bestimmen, auf der Anzeige basierend, ob mindestens eine der ersten Verbindung und der zweiten Verbindung herzustellen ist.

3. Verfahren nach Anspruch 1, wobei Bestimmen ferner umfasst:
Bestimmen, auf der Anzeige basierend, ob eine zweite Verbindung zu einer Basisstation herzustellen ist, um auf die andere Benutzerausrüstung zuzugreifen.

4. Verfahren nach einem der Ansprüche 1 oder 3, wobei Messen ferner umfasst:
Messen mindestens eines einer Signalstärke, einer Anzeige einer Stärke eines empfangenen Signals oder eines Signal-zu-Interferenz-plus-Rauschen-Verhältnisses oder anderer Funkkanalparameter, um die Anzeige zu erzeugen, die die Qualität des empfangenen Signals repräsentiert.

5. Verfahren nach einem der Ansprüche 1 oder 3-4, ferner umfassend:
Empfangen, an einer anrufenden Benutzerausrüstung, einer Präambel-Zuweisungsnachricht (620), die einen anderen Direktzugriff-Präambelsequenzindex enthält, der von einer angerufenen Benutzerausrüstung für eine nicht strittige Direktzugriff-Prozedur mit einer Basisstation verwendet wird, wobei die Benutzerausrüstung die anrufende Benutzerausrüstung umfasst und die andere Benutzerausrüstung die angerufene Benutzerausrüstung umfasst.

6. Verfahren nach einem der Ansprüche 1 oder 3-4, ferner umfassend:
Empfangen, an der angerufenen Benutzerausrüstung, eines anderen Rufsignals, das einen anderen Direktzugriff-Präambelsequenzindex für die nicht strittige Direktzugriff-Prozedur enthält; und
Durchführen, durch die angerufene Benutzerausrüstung, die in Übereinstimmung mit dem anderen Direktzugriff-Präambelsequenzindex konfiguriert ist, der nicht strittigen Direktzugriff-Prozedur.

7. Gerät (800), umfassend:
mindestens einen Prozessor (830);
mindestens einen Speicher (835), wobei der mindestens eine Prozessor und der mindestens eine Speicher konfiguriert sind, mindestens das Folgende bereitzustellen:
Überwachen (412A), an einer Benutzerausrüstung (114B), eines Rufsignals, wobei das Rufsignal einen Direktzugriff-Präambelindex, der einer anderen Benutzerausrüstung (114A) zugewiesen ist, enthält;
Empfangen (910), an der Benutzerausrüstung, die konfiguriert ist, den Direktzugriff-Präambelindex, der einer anderen Benutzerausrüstung zugewiesen ist, zu verwenden, eines Signals (425A), das eine Direktzugriff-Präambel umfasst;
Messen (915), an der Benutzerausrüstung, des empfangenen Signals, um eine Anzeige, die eine Qualität des empfangenen Signals repräsentiert, zu erzeugen (430); und
Bestimmen (920), eher auf der Anzeige als auf einem dedizierten Sondierungsprozess basierend, ob eine erste Verbindung direkt zu der anderen Benutzerausrüstung herzustellen ist.

8. Gerät nach Anspruch 7, wobei das Gerät ferner konfiguriert ist zum
Herstellen, durch die Benutzerausrüstung, der ersten Verbindung direkt zu der anderen Benutzerausrüstung, wenn die Anzeige und ein erster Schwellenwert repräsentieren, dass die erste Verbindung eine ausreichende Qualität der Verknüpfung bereitstellt;
Senden, durch die Benutzerausrüstung zu einer Basisstation, einer Nachricht, die die erste Verbindung direkt zu der anderen Benutzerausrüstung vorschlägt, wobei die erste Verbindung eine Vorrichtung-zu-Vorrichtung-Verknüpfung umfasst;
Herstellen, durch die Benutzerausrüstung, einer zweiten Verbindung zu der Basisstation, um auf die zweite Benutzerausrüstung zuzugreifen, wenn die Anzeige und ein zweiter Schwellenwert repräsentieren, dass die erste Verbindung die ausreichende Qualität der Verknüpfung unter Umständen nicht bereitstellt; und
Senden (740), durch die Benutzerausrüstung zu der Basisstation, einer Nachricht, die eine Zuteilung für den dedizierten Sondierungsprozess vorschlägt, wenn die Benutzerausrüstung nicht in der Lage ist, zu bestimmen, auf der Anzeige basierend, ob mindestens eine der ersten Verbindung und der zweiten Verbindung herzustellen ist.

9. Gerät nach Anspruch 7, wobei der Prozessor, der konfiguriert ist, zu bestimmen, ob eine erste Verbindung herzustellen ist, ferner konfiguriert ist zum
Bestimmen, auf der Anzeige basierend, ob eine zweite Verbindung zu einer Basisstation herzustellen ist, um auf die andere Benutzerausrüstung zuzugreifen, wobei die andere Benutzerausrüstung in einem Funkbetriebsmittelsteuerung-Bereitschaftszustand ist.

10. Gerät nach einem der Ansprüche 7 oder 9, wobei der Prozessor, der konfiguriert ist, das empfangene Signal zu messen, ferner konfiguriert ist zum
Messen mindestens eines einer Signalstärke, einer Anzeige einer Stärke eines empfangenen Signals oder eines Signal-zu-Interferenz-plus-Rauschen-Verhältnisses, um die Anzeige zu erzeugen, die die Qualität des empfangenen Signals repräsentiert.

11. Gerät nach einem der Ansprüche 7 oder 9-10, wobei das Gerät ferner konfiguriert ist zum:
Empfangen, an einer anrufenden Benutzerausrüstung, einer Präambel-Zuweisungsnachricht, die einen anderen Direktzugriff-Präambelsequenzindex enthält, der von einer angerufenen Benutzerausrüstung für eine nicht strittige Direktzugriff-Prozedur mit einer Basisstation verwendet wird, wobei die Benutzerausrüstung die anrufende Benutzerausrüstung umfasst und die andere Benutzerausrüstung die angerufene Benutzerausrüstung umfasst.

12. Gerät nach einem der Ansprüche 7 oder 9-10, wobei das Gerät ferner konfiguriert ist zum
Empfangen, an der angerufenen Benutzerausrüstung, eines anderen Rufsignals, das einen anderen Direktzugriff-Präambelsequenzindex für die nicht strittige Direktzugriff-Prozedur enthält; und
Durchführen, durch die angerufene Benutzerausrüstung, die in Übereinstimmung mit dem anderen Direktzugriff-Präambelsequenzindex konfiguriert ist, der nicht strittigen Direktzugriff-Prozedur.

13. Verfahren, umfassend:
Empfangen (1110), an einer Basisstation (110, 180), einer Anzeige, die repräsentiert, ob eine erste Benutzerausrüstung (114B) konfiguriert ist, eine erste Verbindung direkt mit einer zweiten Benutzerausrüstung (114A) herzustellen; und
Herstellen (1115), durch die Basisstation und auf der Anzeige basierend, einer zweiten Verbindung zwischen der ersten Benutzerausrüstung und der zweiten Benutzerausrüstung, wenn die erste Verbindung nicht hergestellt wird, wobei die erste und zweite Verbindung eher auf einer Direktzugriff-Präambel als auf einer dedizierten Sonde basierend hergestellt werden, um eine Qualität eines Kanals zwischen der ersten Benutzerausrüstung und der zweiten Benutzerausrüstung zu bewerten.

14. Verfahren nach Anspruch 13, ferner umfassend:
Verhindern, durch die Basisstation, einer Zuteilung einer dedizierten Vorrichtung-zu-Vorrichtung-Sonde für Übertragung durch mindestens eine der ersten Benutzerausrüstung und der zweiten Benutzerausrüstung.

15. Gerät (1000), umfassend:
mindestens einen Prozessor (1026);
mindestens einen Speicher (1025), wobei der mindestens eine Prozessor und der mindestens eine Speicher konfiguriert sind, mindestens das Folgende bereitzustellen:
Empfangen (1110), an einer Basisstation (110, 180), einer Anzeige, die repräsentiert, ob eine erste Benutzerausrüstung (114B) konfiguriert ist, eine erste Verbindung direkt mit einer zweiten Benutzerausrüstung (114A) herzustellen; und
Herstellen (1115), auf der Anzeige basierend, einer zweiten Verbindung zwischen der ersten Benutzerausrüstung und der zweiten Benutzerausrüstung, wenn die erste Verbindung nicht hergestellt wird, wobei die erste und zweite Verbindung eher auf einer Direktzugriff-Präambel als auf einer dedizierten Sonde basierend hergestellt werden, um eine Qualität eines Kanals zwischen der ersten Benutzerausrüstung und der zweiten Benutzerausrüstung zu bewerten.

16. Gerät nach Anspruch 15, wobei das Gerät ferner konfiguriert ist zum
Verhindern, durch die Basisstation, einer Zuteilung einer dedizierten Vorrichtung-zu-Vorrichtung-Sonde für Übertragung durch mindestens eine der ersten Benutzerausrüstung und der zweiten Benutzerausrüstung.

17. Computerprogramm, umfassend Anweisungen zum Konfigurieren eines Prozessors, um zu bewirken, dass ein Verfahren nach einem der Ansprüche 1-6 oder der Ansprüche 13-14 durchgeführt wird.

## Revendications

1. Procédé, comprenant les étapes consistant à :
surveiller (412A), au niveau d'un équipement d'utilisateur (114B), un signal de radiorecherche, le signal de radiorecherche comportant un index de préambule d'accès aléatoire attribué à un autre équipement d'utilisateur (114A) ;
recevoir (910), au niveau de l'équipement d'utilisateur configuré pour utiliser l'index de préambule d'accès aléatoire attribué à l'autre équipement d'utilisateur, un signal (425A) comprenant un préambule d'accès aléatoire ;
mesurer (915), au niveau de l'équipement d'utilisateur, le signal reçu dans le but de générer (430) une indication représentant une qualité du signal reçu ; et
déterminer (920), au niveau de l'équipement d'utilisateur, à partir de l'indication plutôt que d'un processus de sondage dédié, s'il convient d'établir une première connexion directement avec l'autre équipement d'utilisateur.

2. Procédé selon la revendication 1, le procédé comprenant en outre les étapes consistant à :
établir, par l'équipement d'utilisateur, la première connexion directement avec l'autre équipement d'utilisateur si l'indication et un premier seuil indiquent que la première connexion offre une qualité de liaison suffisante ;
envoyer, par l'équipement d'utilisateur vers une station de base, un message proposant la première connexion directement avec l'autre équipement d'utilisateur, la première connexion comprenant une liaison de dispositif à dispositif ;
établir, par l'équipement d'utilisateur, une deuxième connexion avec la station de base dans le but d'accéder à l'autre équipement d'utilisateur si l'indication et un deuxième seuil indiquent que la première connexion pourrait ne pas offrir la qualité de liaison suffisante ; et
envoyer (740), par l'équipement d'utilisateur vers la station de base, un message proposant une attribution du processus de sondage dédié si l'équipement d'utilisateur est incapable de déterminer, à partir de l'indication, s'il convient d'établir la première connexion et/ou la deuxième connexion.

3. Procédé selon la revendication 1, dans lequel l'étape consistant à déterminer comprend en outre l'étape consistant à :
déterminer, à partir de l'indication, s'il convient d'établir une deuxième connexion avec une station de base dans le but d'accéder à l'autre équipement d'utilisateur.

4. Procédé selon l'une quelconque des revendications 1 ou 3, dans lequel l'étape consistant à mesurer comprend en outre l'étape consistant à :
mesurer au moins un paramètre parmi une puissance de signal, une indication de puissance de signal reçu ou un rapport signal/brouillage plus bruit, ou d'autres paramètres de canal radio dans le but de générer l'indication représentant la qualité du signal reçu.

5. Procédé selon l'une quelconque des revendications 1 ou 3 et 4, le procédé comprenant en outre l'étape consistant à :
recevoir, au niveau d'un équipement d'utilisateur appelant, un message d'attribution de préambule (620) comportant un autre index de séquence de préambule d'accès aléatoire utilisé par un équipement d'utilisateur appelé pour une procédure d'accès aléatoire sans contention avec une station de base, l'équipement d'utilisateur comprenant l'équipement d'utilisateur appelant et l'autre équipement d'utilisateur comprenant l'équipement d'utilisateur appelé.

6. Procédé selon l'une quelconque des revendications 1 ou 3 et 4, le procédé comprenant en outre les étapes consistant à :
recevoir, au niveau de l'équipement d'utilisateur appelé, un autre signal de radiorecherche comportant un autre index de séquence de préambule d'accès aléatoire pour la procédure d'accès aléatoire sans contention ; et
exécuter, par l'équipement d'utilisateur appelé configuré conformément à l'autre index de séquence de préambule d'accès aléatoire, la procédure d'accès aléatoire sans contention.

7. Appareil (800), comprenant :
au moins un processeur (830) ;
au moins une mémoire (835), ledit au moins un processeur et ladite au moins une mémoire étant configurés pour exécuter au moins les opérations suivantes :
surveiller (412A), au niveau d'un équipement d'utilisateur (114B), un signal de radiorecherche, le signal de radiorecherche comportant un index de préambule d'accès aléatoire attribué à un autre équipement d'utilisateur (114A) ;
recevoir (910), au niveau de l'équipement d'utilisateur configuré pour utiliser l'index de préambule d'accès aléatoire attribué à l'autre équipement d'utilisateur, un signal (425A) comprenant un préambule d'accès aléatoire ;
mesurer (915), au niveau de l'équipement d'utilisateur, le signal reçu dans le but de générer (430) une indication représentant une qualité du signal reçu ; et
déterminer (920) à partir de l'indication plutôt que d'un processus de sondage dédié, s'il convient d'établir une première connexion directement avec l'autre équipement d'utilisateur.

8. Appareil selon la revendication 7, l'appareil étant en outre configuré pour
établir, par l'équipement d'utilisateur, la première connexion directement avec l'autre équipement d'utilisateur si l'indication et un premier seuil indiquent que la première connexion offre une qualité de liaison suffisante ;
envoyer, par l'équipement d'utilisateur vers une station de base, un message proposant la première connexion directement avec l'autre équipement d'utilisateur, la première connexion comprenant une liaison de dispositif à dispositif ;
établir, par l'équipement d'utilisateur, une deuxième connexion avec la station de base dans le but d'accéder à l'autre équipement d'utilisateur si l'indication et un deuxième seuil indiquent que la première connexion pourrait ne pas offrir la qualité de liaison suffisante ; et
envoyer (740), par l'équipement d'utilisateur vers la station de base, un message proposant une attribution du processus de sondage dédié si l'équipement d'utilisateur est incapable de déterminer, à partir de l'indication, s'il convient d'établir la première connexion et/ou la deuxième connexion.

9. Appareil selon la revendication 7, dans lequel le processeur configuré pour déterminer s'il convient d'établir une première connexion est en outre configuré pour
déterminer, à partir de l'indication, s'il convient d'établir une deuxième connexion avec une station de base dans le but d'accéder à l'autre équipement d'utilisateur, lequel autre équipement d'utilisateur se trouve dans un état de repos pour la gestion de ressources radio.

10. Appareil selon l'une quelconque des revendications 7 ou 9, dans lequel le processeur configuré pour mesurer le signal reçu est en outre configuré pour
mesurer au moins un paramètre parmi une puissance de signal, une indication de puissance de signal reçu ou un rapport signal/brouillage plus bruit dans le but de générer l'indication représentant la qualité du signal reçu.

11. Appareil selon l'une quelconque des revendications 7 ou 9 et 10, l'appareil étant en outre configuré pour :
recevoir, au niveau d'un équipement d'utilisateur appelant, un message d'attribution de préambule comportant un autre index de séquence de préambule d'accès aléatoire utilisé par un équipement d'utilisateur appelé pour une procédure d'accès aléatoire sans contention avec une station de base, l'équipement d'utilisateur comprenant l'équipement d'utilisateur appelant et l'autre équipement d'utilisateur comprenant l'équipement d'utilisateur appelé.

12. Appareil selon l'une quelconque des revendications 7 ou 9 et 10, l'appareil étant en outre configuré pour
recevoir, au niveau de l'équipement d'utilisateur appelé, un autre signal de radiorecherche comportant un autre index de séquence de préambule d'accès aléatoire pour la procédure d'accès aléatoire sans contention ; et
exécuter, par l'équipement d'utilisateur appelé configuré conformément à l'autre index de séquence de préambule d'accès aléatoire, la procédure d'accès aléatoire sans contention.

13. Procédé, comprenant les étapes consistant à :
recevoir (1110), au niveau d'une station de base (110, 180), une indication indiquant si un premier équipement d'utilisateur (114B) est configuré pour établir une première connexion directement avec un deuxième équipement d'utilisateur (114A) ; et
établir (1115), par la station de base et à partir de l'indication, une deuxième connexion entre le premier équipement d'utilisateur et le deuxième équipement d'utilisateur si la première connexion n'est pas établie, les première et deuxième connexions étant établies à partir d'un préambule d'accès aléatoire plutôt que d'une sonde dédiée dans le but d'évaluer une qualité d'un canal entre le premier équipement d'utilisateur et le deuxième équipement d'utilisateur.

14. Procédé selon la revendication 13, le procédé comprenant en outre l'étape consistant à :
bloquer, par la station de base, une attribution d'une sonde de dispositif à dispositif dédiée pour la transmission par le premier équipement d'utilisateur et/ou le deuxième équipement d'utilisateur.

15. Appareil (1000), comprenant :
au moins un processeur (1026) ;
au moins une mémoire (1025), ledit au moins un processeur et ladite au moins une mémoire étant configurés pour exécuter au moins les opérations suivantes :
recevoir (1110), au niveau d'une station de base (110, 180), une indication indiquant si un premier équipement d'utilisateur (114B) est configuré pour établir une première connexion directement avec un deuxième équipement d'utilisateur (114A) ; et
établir (1115), à partir de l'indication, une deuxième connexion entre le premier équipement d'utilisateur et le deuxième équipement d'utilisateur si la première connexion n'est pas établie, les première et deuxième connexions étant établies à partir d'un préambule d'accès aléatoire plutôt que d'une sonde dédiée dans le but d'évaluer une qualité d'un canal entre le premier équipement d'utilisateur et le deuxième équipement d'utilisateur.

16. Appareil selon la revendication 15, l'appareil étant en outre configuré pour
bloquer, par la station de base, une attribution d'une sonde de dispositif à dispositif dédiée pour la transmission par le premier équipement d'utilisateur et/ou le deuxième équipement d'utilisateur.

17. Programme d'ordinateur, comprenant des instructions permettant de configurer un processeur pour lui faire exécuter un procédé selon l'une quelconque des revendications 1 à 6 ou des revendications 13 et 14.
